# FASCICULE DE BREVET EUROPEEN

(11) **EP 0 615 062 B1**
(45) Date de publication et mention de la délivrance du brevet: **23.04.1997**
(21) Numéro de dépôt: 94400482.9
(22) Date de dépôt: 08.03.1994
(51) Int. Cl.: F02D 41/02, B60R 16/02

(54) **Procédé de transmission de signaux de commande pour un système de contrôle électronique d'un moteur à combustion interne**
Verfahren zum Übertragen von Steuersignalen für ein elektronisches Steuersystem einer Brennkraftmaschine
Method for transmission of control signals for an electronic control of an internal combustion engine

(30) Priorité: 12.03.1993 FR 9302862
(43) Date de publication de la demande: 14.09.1994
(73) Titulaire: Société Anonyme dite: REGIE NATIONALE DES USINES RENAULT, 92109 Boulogne Billancourt (FR)
(72) Inventeur: Couvreux, Alain, F-75013 Paris (FR); Solera, José, F-78500 Sartrouville (FR)

(56) Documents cités:
- EP-A- 0 299 655
- EP-A- 0 393 233
- US-A- 4 520 359
- US-A- 5 090 386

## Description

La présente invention concerne un procédé de transmission de signaux de commande pour un système de contrôle électronique d'un moteur à combustion interne équipant un véhicule automobile. L'invention concerne plus particulièrement l'utilisation d'une même ligne pour transmettre deux signaux distincts.

La généralisation de l'électronique pour commander et surveiller le fonctionnement des différentes fonctions présentes sur les véhicules automobiles à moteur, telles que l'allumage, l'injection de carburant, le refroidissement, la transmission, le freinage ou encore la climatisation, entraîne la multiplication sous le capot des véhicules des systèmes de contrôle électroniques et des câblages pour assurer la transmission des différents signaux de commande.

L'objet de la présente invention est donc de réduire l'incertitude le coût des systèmes de contrôle électronique et notamment celui du système de contrôle moteur, en réduisant leur nombre de sorties.

Selon l'invention, le procédé de transmission de signaux de commande pour un système de contrôle électronique d'un moteur à combustion interne est caractérisé en ce que le signal PMH représentatif du passage au Point Mort Haut d'un cylindre de référence est transmis à l'attention de systèmes récepteurs par l'intermédiaire d'une sortie par ailleurs associée à la transmission d'un signal de commande à destination d'un relais servant à piloter un organe du moteur, cet organe demeurant activé tout le temps du fonctionnement du moteur.

Selon une autre caractéristique du procédé objet de l'invention, le signal PMH est défini par des impulsions de durée prédéterminée.

Selon une autre caractéristique du procédé objet de l'invention, la durée des impulsions est définie de façon à permettre tout à la fois leur reconnaissance par les systèmes récepteurs et le non déclenchement du relais.

Selon une autre caractéristique du procédé objet de l'invention, l'organe associé est la pompe à carburant du moteur.

On comprendra mieux les buts, aspects et avantages de la présente invention, d'après la description donnée ci-après d'un mode de réalisation de l'invention, donné à titre d'exemple non limitatif, en se référant au dessin annexé, dans lequel :
- la figure 1 est un schéma électrique partiel du système de contrôle moteur mettant en oeuvre le procédé de transmission de signaux selon l'invention ;
- la figure 2 est un chronogramme détaillant les caractéristiques du procédé de transmission.

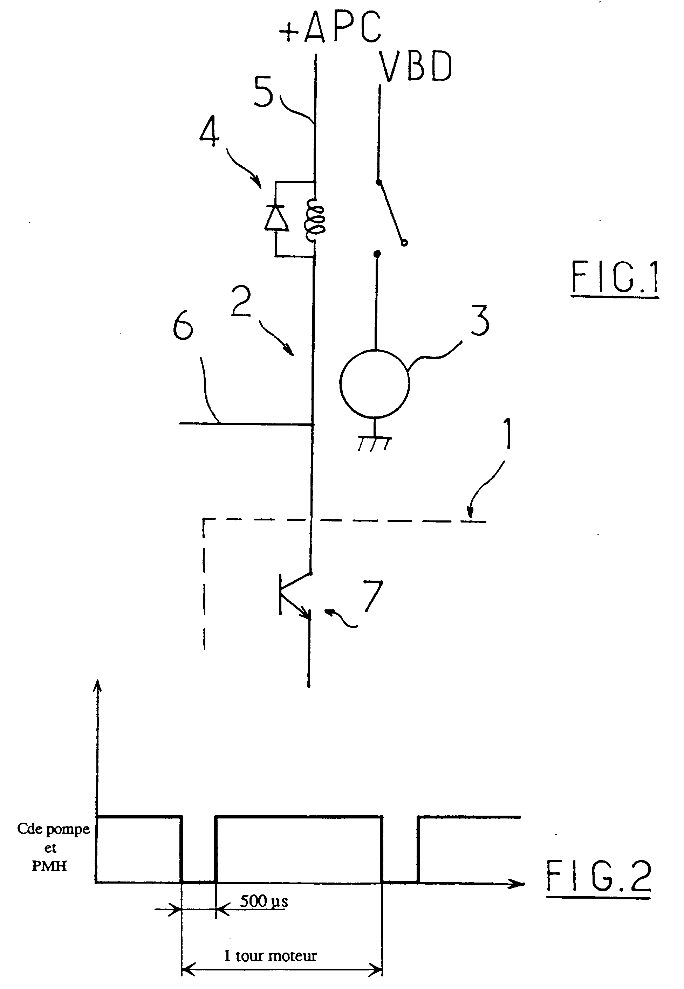

La figure 1 décrit donc schématiquement un système de contrôle moteur, référencé 1. Seuls les éléments nécessaires à la compréhension de l'invention ont été figurés.

Le système de contrôle du moteur 1 comprend classiquement un calculateur comportant une unité centrale ou CPU, une mémoire vive ou RAM, une mémoire morte ou ROM, des convertisseurs analogiques-numériques et différentes interfaces d'entrées et de sorties.

Le système de contrôle moteur 1 reçoit différents signaux d'entrée caractéristiques du fonctionnement du moteur : charge, régime, température d'eau, pression collecteur, etc... Il effectue des opérations et génère à son tour des signaux de sortie à destination notamment des organes contrôlés directement comme par exemple les injecteurs de carburant, les bougies ou la pompe à carburant.

Le système de contrôle moteur 1 génère également des signaux à destination d'autres centraux de commandes équipant le véhicule automobile. Ainsi le signal Point Mort Haut ou PMH, signal essentiel pour suivre le déroulement des cycles de fonctionnement du moteur (pour un moteur à quatre temps un tour moteur correspond à l'intervalle séparant deux passages successifs au Point Mort Haut d'un cylindre donné), est envoyé au système de contrôle de la boîte automatique ou au système d'affichage du régime de rotation du moteur.

Le signal PMH est classiquement déduit de la rotation de l'arbre moteur par observation de la rotation d'une couronne de mesure dentée, solidaire du volant d'inertie du moteur, par exemple la couronne de type standard montée sur les moteurs à allumage électronique. La couronne qui comporte un repère, telle qu'une dent manquante, est associée à un capteur fixe, par exemple à réluctance variable, lequel délivre un signal à destination du système de contrôle moteur 1 à chaque passage du repère, passage coïncidant avec la position d'un cylindre donné de référence au Point Mort Haut.

Selon l'art antérieur, le système de contrôle moteur comporte une sortie spécifique pour transmettre le signal PMH à destination des autres utilisateurs et différentes autres sorties pour commander par exemple le fonctionnement de la pompe à carburant.

L'objet du procédé selon l'invention est de supprimer cette sortie spécifique dédiée au signal PMH, en utilisant par exemple la sortie, référencée 2, destinée à commander la pompe à carburant pour transmettre simultanément le signal PMH et le signal de commande de la pompe à carburant 3.

En effet, le système de contrôle moteur doit assurer la mise en oeuvre de la pompe à carburant pendant tout le temps de fonctionnement du moteur, en fait la pompe est classiquement activée dès que le contact a été mis, clef de contact en position +APC.

Pour activer la pompe à carburant le système de contrôle moteur 1 comporte donc une sortie 2 comportant un interrupteur piloté tel qu'un transistor 7, la mise sous tension d'un relais 4 connecté à la borne + de la batterie du véhicule grâce à une ligne de liaison 5 coopérant avec un contacteur non figuré actionné par la clef de contact du véhicule, pour éviter toute mise en route intempestive de la pompe à carburant.

Le déclenchement du relais 4 opère alors la fermeture de la ligne 8 reliant directement la batterie à la pompe à carburant 3 et donc la mise sous tension de cette dernière.

Il en résulte que tout le temps de fonctionnement du moteur le système de contrôle moteur garde le transistor 7 activé de façon à maintenir le relais 4 fermé. Or la demanderesse a pu constater que le relais 4 demeurait insensible à des variations de tension, à la condition toutefois que ces variations soient suffisamment brèves pour que compte tenu de l'inertie du relais 4 celui-ci ne puisse réagir.

Le procédé de transmission de données selon l'invention consiste donc, conformément au chronogramme de la figure 2, à faire transiter le signal PMH à travers la sortie 2 dédiée à la pompe à carburant 3, et en utilisant une ligne de dérivation 6 connectée à la ligne 5, vers les utilisateurs concernés. Le signal PMH est alors transmis en adoptant une impulsion correctement calibrée pour permettre tout à la fois sa détection par les centraux de commandes récepteurs et le non décollement du relais 4.

On peut ainsi pour un relais du type répondant à la norme NRF 14331 adopter une impulsion de 500 µs.

Ainsi, suivant le procédé objet de l'invention en utilisant une seule sortie du système de contrôle moteur pour transmettre des signaux de commande distincts, ce qui simplifie notablement la réalisation de ce dernier et donc son coût.

Ainsi le signal PMH peut transiter par toute autre sortie du système de contrôle moteur commandant continûment un relais pendant tout le fonctionnement du moteur. En effet la durée de l'impulsion transmettant le signal PMH est choisie de façon à être sans incidence sur le fonctionnement du relais que ce soit à l'ouverture ou que se soit à la fermeture.

## Revendications

1. Procédé de transmission de signaux de commande pour un système de contrôle électronique (1) d'un moteur à combustion interne, caractérisé en ce que le signal PMH représentatif du passage au Point Mort Haut d'un cylindre de référence est transmis à l'attention de systèmes récepteurs par l'intermédiaire d'une sortie (2) par ailleurs associée à la transmission d'un signal de commande à destination d'un relais (4) servant à piloter un organe (3) du moteur, ledit organe demeurant activé tout le temps du fonctionnement du moteur.

2. Procédé de transmission de signaux selon la revendication 1, caractérisé en ce que le signal PMH est défini par des impulsions de durée prédéterminée.

3. Procédé de transmission de signaux selon la revendication 2, caractérisé en ce que la durée desdites impulsions est définie de façon à permettre tout à la fois leur reconnaissance par lesdits systèmes récepteurs et le non déclenchement dudit relais (4).

4. Procédé de transmission de signaux selon l'une quelconque des revendications précédentes, caractérisé en ce que ledit organe est la pompe à carburant du moteur.

## Patentansprüche

1. Verfahren zur Übertragung von Steuersignalen für ein elektronisches Steuersystem 1 einer Brennkraftmaschine. dadurch gekennzeichnet, daß das den Durchgang durch den oberen Totpunkt eines Referenzzylinders darstellende Signal PMH zu Empfangsanordnungen übertragen wird mittels eines Ausgangs (2), der außerdem zur Übertragung eines Steuersignals in Richtung eines Relais (4) dient, das einen Teil (3) des Motors steuert, wobei dieses Teil während der gesamten Betriebszeit des Motors aktiviert ist.

2. Verfahren zur Übertragung von Signalen nach Anspruch 1, dadurch gekennzeichnet, daß das Signal PMH durch Impulse vorgegebener Dauer definiert ist.

3. Verfahren zur Übertragung von Signalen nach Anspruch 2, dadurch gekennzeichnet, daß die Dauer der Impulse derart definiert ist, daß zugleich ihr Erkennen durch die Empfangsanordnungen und die Nichtauslösung des Relais (4) ermöglicht wird.

4. Verfahren zur Übertragung von Signalen nach einem der vorhergehenden Ansprüche, dadurch gekennzeichnet, daß das Teil die Kraftstoffpumpe des Motors ist.

## Claims

1. Process for transmission of command signals for an electronic control system (1) for an internal combustion engine, characterised in that the TDC signal representing the passage to the top dead centre of a reference cylinder is transmitted for the attention of receptor systems by means of an output (2) furthermore associated with the transmission of a command signal intended for a relay (4) which monitors a member (3) of the engine, said member remaining activated throughout the time the engine is operating.

2. Process of transmission of signals according to claim 1, characterised in that the TDC signal is defined by pulses of a pre-determined duration.

3. Process of transmission of signals according to claim 2, characterised in that the duration of said pulses is defined so as to simultaneously permit recognition thereof by said receptor systems and the non-activation of said relay (4).

4. Process of transmission of signals according to any one of the preceding claims, characterised in that said member is the engine fuel pump.
